# EUROPEAN PATENT SPECIFICATION

(11) **EP 2 406 712 B1**
(45) Date of publication and mention of the grant of the patent: **09.04.2014**
(21) Application number: 10708607.6
(22) Date of filing: 24.02.2010
(51) Int. Cl.: G06F 9/445, G06F 21/00, H04L 29/08, H04L 29/06, G06F 21/35

(54) **METHOD FOR TRANSMITTING AN NFC APPLICATION AND COMPUTER DEVICE**
VERFAHREN ZUM ÜBERTRAGEN EINER NFC-ANWENDUNG UND COMPUTEREINRICHTUNG
PROCÉDÉ DE TRANSMISSION D'UNE APPLICATION NFC ET DISPOSITIF INFORMATIQUE

(30) Priority: 10.03.2009 EP 09154742
(43) Date of publication of application: 18.01.2012
(73) Proprietor: NXP B.V., 5656 AG Eindhoven (NL)
(72) Inventor: CORDA, Alexandre, Redhill Surrey RH1 1DL (GB); AFFOUARD, Baptiste, Redhill SurreyRH1 1DL (GB)
(74) Representative: Krott, Michel
(86) International application number: PCT/IB2010/050807
(87) International publication number: WO 2010/103414

(56) References cited:
- WO-A1-2008/050439
- WO-A2-2009/013700
- US-A1- 2008 276 301

## Description

### FIELD OF THE INVENTION

The invention relates to a method for transmitting an NFC application and to a computer device.

### BACKGROUND OF THE INVENTION

Near Field Communication, abbreviated "NFC", is a short-range high frequency wireless communication technology enabling exchange of data between devices within a relative short distance, for instance, about 10 centimeters. NFC is based on RFID (radio frequency identification) and combines an interface of a smartcard and a reader into a single device. NFC devices can communicate with RFID readers and with other NFC devices and may, for instance, be mobile phones.

Business opportunities presented by using NFC enabled mobile devices, such as mobile phones, for, for instance, contactless payment, transport ticketing, loyalty and other services may be of interest, for instance, for mobile operators and service providers in the banking, transport and retail sectors.

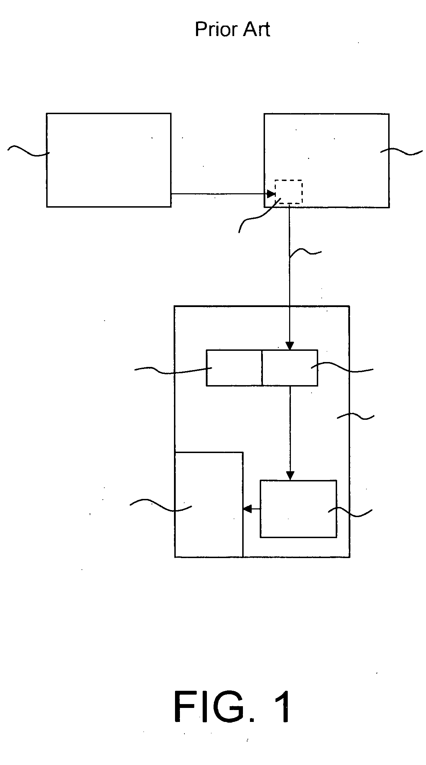

For addressing operational requirements, NFC utilizes a so called Trusted Service Manger (TSM) which is supposed to help service providers to securely distribute and manage, for instance, contactless services for their customers utilizing networks of mobile operators. Fig. 1 illustrates how a Trusted Service Manager Backend is conventionally used to transmit an NFC application issued by a service provider web site to a mobile telephone comprising NFC capability.

If the service provider wants to issue the NFC application to the mobile phone, he connects his service provider web site to the mobile phone through the Trusted Service Manager Backend. The Trusted Service Manager Backend establishes a secure channel to transmit the NFC application over the air OTA to the mobile phone which includes an appropriate interface which is, for instance, a GSM interface not explicitly shown in the figures.

The mobile phone comprises a proxy, a secure application, also known as "wallet", to present information about NFC applications already installed on the mobile phone to the user of the mobile phone, an NFC module including a Service Manager and a memory to store the NFC application.

US 2008/276301 A1 discloses a network based installation management system that dynamically manages secure software installation on a client. The server is configured to determine the software required and prepare an appropriated response containing the list of software and an information file containing the respective attributes of the list of software. The server encoded this response and the encoded response is transmitted to the client. The client on receiving the response is configured to authenticate the response and install the encoded response after authentication. Highly accurate and reliable software installation using the network based installation management system may be achieved using a respective hardware element on the client and the server, which is configured to encode and decode a request and/or response suitably thereby providing a high level of security and trust in an un-trusted network environment.

WO 2008/050439 A1 discloses an application management device that can collectively manage and receive providing service as to applications on different platforms in a mobile terminal device equipped with an IC card, such as a card application used for the same service, a native application, and "Java" application. This application management device is applied to a mobile terminal device to manage a plurality of applications used for service by means of an IC function of an IC card set at the mobile terminal device. A table memory unit stores a plurality of applications comprised of a card application of the card, a native application dependent on an inherent platform in the mobile terminal device and a non-native application in association with a plurality of application names indicative of a plurality of the applications and a service ID indicative of service carried out in cooperation with a plurality of applications. An integrated application control unit manages a plurality of applications used for each service shown by the service ID by means of the stored service ID and the plurality of the application names in association with the service ID.

WO 2009/013700 A2 discloses a Trusted Service Manager (TSM) that receives via a first communication channel from a Service Provider a request that contains an application together with a unique identifier of a mobile phone, particularly its telephone number. The mobile phone is equipped with a memory device that comprises multiple memory sectors being protected by sector keys. Preferably, the memory device is a MIFARE device. The TSM extracts the application and the unique identifier from the received request, assigns destination sector(s) and associated sector key(s) of the memory device, compiles the application, the sector key(s) and the sector number(s) of the destination sector(s) into a setup-message, encrypts the setup-message and transmits it to either the mobile phone via a second communication channel or the Service Provider via the first communication channel. If the setup-message is transmitted to the Service Provider, the Service Provider sends it over the second communication channel to the mobile phone.

It is an object of the invention to provide an alternative method to transfer an NFC application to an NFC device.

### OBJECT AND SUMMARY OF THE INVENTION

The object of the invention is achieved by means of a method for transmitting an NFC application, comprising the steps of:
establishing, by means of a proxy, a secure channel between a Trusted Service Manager and an NFC device via a computing device comprising the proxy and via an RFID reader of the computing device, and
channeling, by utilizing the proxy, to the NFC device an NFC application intended for the NFC device and received at the computing device from the Trusted Service Manager through the secure channel.

The object is also achieved in accordance by the invention by means of a computing device comprising a reader and a proxy configured to carry out the inventive method for transmitting the NFC application.

The computing device may particularly be a point of sale, can, however, be any computing device, such as a PC, home computer or PDA.

According to the inventive method, the NFC application is not transmitted from the Trusted Service Manager directly to the NFC device over the air, but via means of RFID (radio frequency identification) utilizing the RFID reader and the proxy which runs on the computing device. The proxy of the computing device is an application run on the computing device and basically services a request of the Trusted Service Manager to load up the NFC application to the NFC device via the computing device instead of sending the NFC application directly over the air. Via a computing device comprising the proxy and via an RFID reader of the computing device, the Trusted Service Manager can communicate with the NFC device in a secure manner.

The reader which may have both, reading and writing capabilities, communicates with the NFC device by means of an electromagnetic wave or signal. The NFC device may include an appropriate NFC interface based on RFID designed to accommodate the reader such that the NFC application can be received at the NFC device utilizing the NFC interface of the NFC device.

In one embodiment of the inventive method, a Service Manager of the NFC device is utilized to process the NFC application received by the NFC interface. The Service Manager is an application run on the NFC device. Thus, the Service Manager of the NFC device can communicate with the Trusted Service Manager in a secure manner via a computing device comprising the proxy and via an RFID reader of the computing device.

The NFC application received at the NFC device may be stored on a memory of the NFC device. This procedure may be controlled by the Service Manager.

In order to assure the channel to be secure, the inventive method may comprise exchanging keys stored on a memory of the NFC device and associated with the NFC device and/or a user of the NFC device between the NFC device and the Trusted Service Manager utilizing the proxy and the reader. The exchange of the keys may be controlled by the Service Manager and/or the Trusted Service Manager.

Before establishing the secure channel, the NFC application intended for the NFC device may be received at the Trusted Service Manager from a service provider associated with the NFC device via Web services.

The NFC device may be a device including an interface for communicating over the air, such as a GSM interface. An example of such a device is a mobile phone.

The inventive method for transmitting the NFC application to the NFC device is not based on communication over the air (OTA). Consequently, the NFC device does not need such a communication interface and further does not need a wallet and a proxy located within the NFC device as it is needed if transmitting the NFC application within the conventional set-up. The NFC device may therefore be a device lacking such an interface (a so called non-connected NFC device), such as an NFC music player, or may be an NFC plastic card, such as a Mifare card. As a result, the application of NFC can be extended to an increased variety of devices and is not only limited to connected devices, i.e. NFC devices which can receive NFC applications over the air (OTA).

The inventive method is applicable to all kinds of actions related to issuing the NFC application to the NFC device, including reloading or revocation.

These and other aspects of the invention are apparent from and will be elucidated with reference to the embodiments described hereinafter.

### BRIEF DESCRIPTION OF THE DRAWINGS

The invention will be described in greater detail hereinafter, by way of nonlimiting examples, with reference to the embodiments shown in the drawings.
Fig. 1 is a diagram illustrating transferring an NFC application from a Trusted service provider to an NFC device in a conventional manner;
Fig. 2 is a diagram illustrating transferring an NFC application from a service provider to an NFC device; and
Fig. 3 is a flow chart illustrating the transfer of the NFC application of Fig. 2

### DESCRIPTION OF EMBODIMENTS

Fig. 1 has been discussed in the introduction.

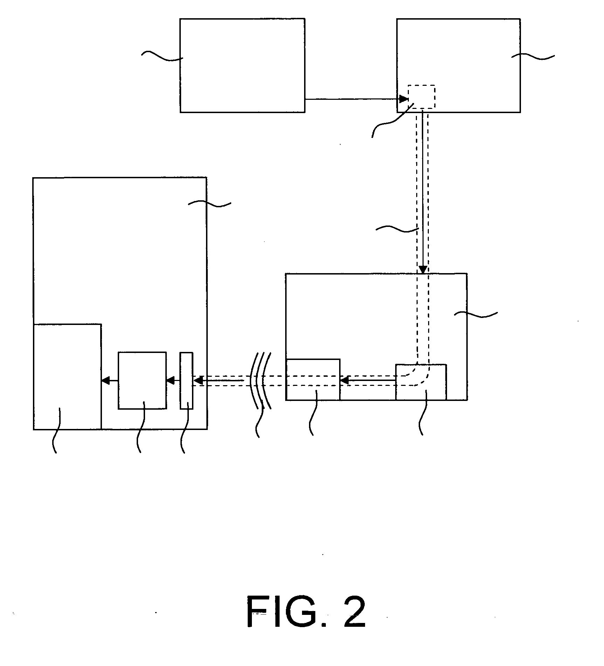

Fig. 2 shows the mobile phone of Fig. 1 as an example of a hand set which includes NFC capabilities. The mobile phone is thus an example of an NFC device.
Fig. 2 further shows the Trusted Service Manger Backend and the service provider web site operated by the service provider.

Furthermore, the mobile phone comprises a radio frequency identification (RFID) interface operatively coupled to the Service Manager. The RFID interface is configured to establish and to conduct communication between the mobile phone and an RFID reader via electromagnetic waves.

For the exemplary embodiment, the reader, which includes reading and writing capabilities, is part of a point of sale such that the point of sale can communicate with the mobile phone for conducting conventional transactions based on RFID as it is generally known in the art.

For the exemplary embodiment, the point of sale comprises further a proxy. The proxy is configured to service requests of the Trusted Service Manager Backup to load up the NFC application to the mobile phone instead of sending the NFC application over the air OTA.

Depending on the service provider, the NFC application may, for instance, be a transport application, a payment application, a loyalty application, an event ticket or a governmental application. The NFC application is meant to be stored and executed on the mobile phone.

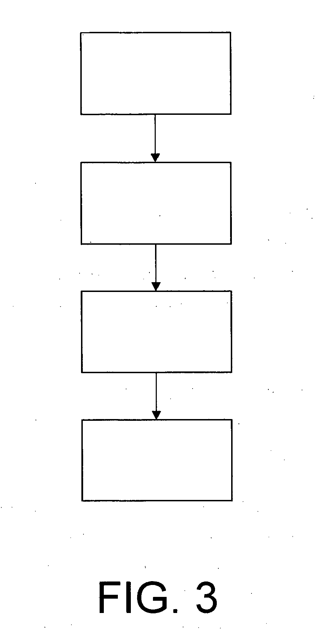

Fig. 3 summarizes the steps performed for loading up the NFC application.

If the service provider associated with the mobile phone wants to issue the NFC application which is, for instance, a Mifare Application, then the service provider web site connects to the Trusted Service Manager Backend. Thus, the service provider connects to the Trusted Service Manager Backend through Web Services and sends the NFC application intended for the mobile phone to the Trusted Service Manager Backend.

When the mobile phone is in proximity of the point of sale such that the electromagnetic waves emitted by the reader can reach the RFID interface of the mobile phone with sufficient energy level, then the proxy establishes a secure channel between the Trusted Service Manger Backend and the mobile phone. Particularly, the proxy of the Point of Sale establishes the secure channel via the reader and the RFID interface of the mobile phone to the Service Manager of the mobile phone.

In order to establish and to potentially assure the channel to be fully secure, keys stored on the mobile phone, for instance, on the memory and particularly managed by the Service Manager may be exchanged between the mobile phone and the Trusted Service Manger Backend via the proxy, the RFID reader and the RFID interface of the mobile phone.

After having established the secure channel between the Trusted Service Manger Backend and the mobile phone via the proxy, the Trusted Service Manager Backend and the mobile phone, particularly the Service Manager of the mobile phone can communicate in a secure manner. Then, the Trusted Service Manger Backend transmits the NFC application to the point of sale which forwards it to the mobile phone utilizing the proxy and the reader.

For the exemplary embodiment, the Service Manager stores the received NFC application on the memory and initializes the newly loaded NFC application so that it is available on the mobile phone.

For the exemplary embodiment described, the proxy is part of the point of sale. Generally, the proxy does not need to be part of a point of sale. In General, the proxy can be part of a computing device, such as a PC or a PDA, which are connected to or comprise a RFID reader such that the Trusted Service Manager Backend can establish the secure channel via the proxy and the reader to the mobile phone for sending the NFC application.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

## Claims

1. A method for transmitting an NFC application, comprising the steps of:
establishing, by means of a proxy, a secure channel between a Trusted Service Manager and an NFC device via a computing device comprising the proxy and via an RFID reader of the computing device, the RFID reader having reading and writing capabilities, and
channeling, by utilizing the proxy, to the NFC device an NFC application intended for the NFC device and received at the computing device from the Trusted Service Manager through the secure channel,
receiving the NFC application at the NFC device utilizing an NFC interface of the NFC device.

2. The method of claim 1, comprising processing the NFC application received by the NFC interface utilizing a Service Manager of the NFC device and/or storing the NFC application on a memory of the NFC device.

3. The method of claim 1, comprising exchanging keys stored on a memory of the NFC device and associated with the NFC device and/or a user of the NFC device between the NFC device and the Trusted Service Manager utilizing the proxy and the reader for establishing the secure channel.

4. The method of claim 1, comprising, before establishing the secure channel, receiving at the Trusted Service Manager the NFC application intended for the NFC device from a service provider associated with the NFC device via Web services.

5. The method of claim 1, wherein the computing device is a point of sale, a home computer, or a PDA.

6. The method of claim 1, wherein the NFC device is a mobile phone, a plastic card, or a non-connected NFC device.

7. The method of claim 1, wherein the NFC application comprises reloading or revocation.

8. A computing device comprising a reader and a proxy configured to carry out the method of any of claims 1 to 7.

9. The computing device of claim 8, being a point of sale, a PC, or a PDA.

## Patentansprüche

1. Ein Verfahren zum Übertragen einer NFC Anwendung, aufweisend die Schritte:
Einrichten, mittels eines Proxys, eines sicheren Kanals zwischen einem Trusted Service Manager und einer NFC Vorrichtung über eine Computer Vorrichtung, welche den Proxy aufweist, und über einen RFID Leser der Computer Vorrichtung, wobei der RFID Leser Lese- und Schreibfähigkeiten hat, und
Kanalisieren, mittels Verwenden des Proxys, einer NFC Anwendung, welche für die NFC Vorrichtung vorgesehen ist und bei der Computer Vorrichtung vom Trusted Service Manager durch den sicheren Kanal empfangen wird, zu der NFC Vorrichtung,
Empfangen der NFC Anwendung bei der NFC Vorrichtung unter Verwendung eines NFC Interface von der NFC Vorrichtung.

2. Das Verfahren gemäß Anspruch 1, aufweisend
Verarbeiten der NFC Anwendung, welche mittels des NFC Interface empfangen wurde, unter Verwendung eines Service Managers der NFC Vorrichtung und/oder
Speichern der NFC Anwendung auf einem Speicher der NFC Vorrichtung.

3. Das Verfahren gemäß Anspruch 1, aufweisend
Austauschen von Schlüsseln, welche in einem Speicher der NFC Vorrichtung gespeichert sind und mit der NFC Vorrichtung und/oder einem Nutzer der NFC Vorrichtung verknüpft sind, zwischen der NFC Vorrichtung und dem Trusted Service Manager unter Verwendung des Proxys und des Lesers zum Einrichten des sicheren Kanals.

4. Das Verfahren gemäß Anspruch 1, aufweisend
Vor dem Einrichten des sicheren Kanals, Empfangen der NFC Anwendung bei dem Trusted Service Manager, welche für die NFC Vorrichtung vorgesehen ist, von einem Service Provider, welcher über Web Services mit der NFC Vorrichtung verknüpft ist.

5. Das Verfahren gemäß Anspruch 1, wobei die Computer Vorrichtung ein Verkaufspunkt, ein Heimcomputer oder ein PDA ist.

6. Das Verfahren gemäß Anspruch 1, wobei die NFC Vorrichtung ein Mobiltelefon, eine Plastikkarte oder eine nicht verbundene NFC Vorrichtung ist.

7. Das Verfahren gemäß Anspruch 1, wobei die NFC Anwendung ein Neuladen oder eine Sperrung aufweist.

8. Eine Computer Vorrichtung aufweisend einen Leser und einen Proxy, welcher konfiguriert ist, um das Verfahren gemäß irgendeinem der Ansprüche 1 bis 7 auszuführen.

9. Die Computer Vorrichtung gemäß Anspruch 8, welche ein Verkaufspunkt, ein PC oder ein PDA ist.

## Revendications

1. Procédé pour transmettre une application NFC, comprenant les étapes consistant à :
établir, au moyen d'un mandataire, un canal sécurisé entre un Gestionnaire de Services de Confiance et un dispositif NFC via un dispositif informatique comprenant le mandataire et via un lecteur RFID du dispositif informatique, le lecteur RFID étant doté de capacités de lecture et d'écriture, et
acheminer par le canal sécurisé, au moyen du mandataire, jusqu'au dispositif NFC, une application NFC destinée au dispositif NFC et reçue au niveau du dispositif informatique depuis le Gestionnaire de Services de Confiance,
recevoir l'application NFC au niveau du dispositif NFC au moyen d'une interface NFC du dispositif NFC.

2. Procédé selon la revendication 1, comprenant l'étape consistant à traiter l'application NFC reçue par l'interface NFC au moyen d'un Gestionnaire de Services du dispositif NFC et/ou stocker l'application NFC dans une mémoire du dispositif NFC.

3. Procédé selon la revendication 1, comprenant l'étape consistant à échanger des clés stockées dans une mémoire du dispositif NFC et associées au dispositif NFC et/ou à un utilisateur du dispositif NFC entre le dispositif NFC et le Gestionnaire de Services de Confiance au moyen du mandataire et du lecteur en vue d'établir le canal sécurisé.

4. Procédé selon la revendication 1, comprenant, préalablement à l'étape consistant à établir le canal sécurisé, l'étape consistant à recevoir au niveau du Gestionnaire de Services de Confiance l'application NFC destinée au dispositif NFC depuis un fournisseur de services associé au dispositif NFC via des services Web.

5. Procédé selon la revendication 1, dans lequel le dispositif informatique est un point de vente, un ordinateur domestique ou un assistant numérique personnel (PDA).

6. Procédé selon la revendication 1, dans lequel le dispositif NFC est un téléphone mobile, une carte en plastique ou un dispositif NFC non connecté.

7. Procédé selon la revendication 1, dans lequel l'application NFC comprend un rechargement ou une révocation.

8. Dispositif informatique comprenant un lecteur et un mandataire configurés pour mettre en oeuvre le procédé selon l'une quelconque des revendications 1 à 7.

9. Dispositif informatique selon la revendication 8, prenant la forme d'un point de vente, d'un PC ou d'un PDA.
